# EUROPÄISCHE PATENTSCHRIFT

(11) **EP 2 703 907 B1**
(45) Veröffentlichungstag und Bekanntmachung des Hinweises auf die Patenterteilung: **02.08.2023**
(21) Anmeldenummer: 13182429.4
(22) Anmeldetag: 30.08.2013
(51) Int. Cl.: G03H 1/20, G03H 1/04, G03H 1/02

(54) **Individualisierungseinrichtung und Belichtungsvorrichtung für Hologramme**
Individualisation device and exposure apparatus for holograms
Dispositif d'individualisation et dispositif d'éclairage pour des hologrammes

(30) Priorität: 31.08.2012 DE 102012215540
(43) Veröffentlichungstag der Anmeldung: 05.03.2014
(73) Patentinhaber: Bundesdruckerei GmbH, 10969 Berlin (DE)
(72) Erfinder: Leopold, André, Dr., 10119 Berlin (DE); Gahlbeck, Jeffry, 15517 Fürstenwalde (DE); Märtens, Detlef, 13599 Berlin (DE)
(74) Vertreter: Obst, Bernhard

(56) Entgegenhaltungen:
- EP-A1- 1 447 703
- DE-A1-102007 042 385
- GB-A- 2 424 080
- US-A- 5 067 805
- US-A- 5 805 749
- US-A1- 2010 165 426
- Kjell Einar Olsen: "Cand. scient. thesis in Optics and Laser Physics. Holographic multi-stereogram constructed from computer images : Applied 3-D printer -Chapter 7", , 10. November 1997 (1997-11-10), Seiten 47-60, XP055085760, Bergen Gefunden im Internet: URL:http://www.fou.uib.no/fd/1996/h/404001 /index.htm [gefunden am 2013-10-29]
- P. Hariharan: In: "Optical holography- Principes, techniques and applications", 1991, Cambridge University Press, Cambridge, XP055085933, Seiten 65-69, * Section 5.3 Beam polarization; Seite 65 - Seite 66 *
- Daan Sprünken: "a 2D Spatial Light Modulator for spatio-temporal shaping" In: "Master's Thesis", 29 August 2008 (2008-08-29), University of Twente, Enschede -The Netherlands, XP055300891, pages 1-85,

## Beschreibung

Die Erfindung betrifft eine Individualisierungseinrichtung und eine Belichtungsvorrichtung für Hologramme, insbesondere eine Belichtungsvorrichtung, um Hologramme im sogenannten Kontaktkopierverfahren herzustellen.

Aus dem Stand der Technik ist es bekannt, Hologramme als Sicherheitselemente in Sicherheitsdokumente oder Wertdokumente zu integrieren. Sicherheitselemente sind solche Entitäten, welche mindestens ein Merkmal aufweisen, welches ein unautorisiertes Duplizieren, Nachahmen und/oder Verfälschen eines Gegenstands erschwert, in welchen das Sicherheitselement integriert ist. Hologramme werden als Sicherheitselemente beispielsweise in Reisepässen oder Personalausweisen verwendet. Sie werden jedoch auch in Banknoten, Führerscheinen, Visa, anderen Wertzeichen, Etiketten oder Tickets, Kreditkarten, Bankkarten; Telefonkarten oder Ähnlichem eingesetzt.

Eine besondere Gruppe von Hologrammen stellen Volumenhologramme dar. Bei einem Volumenhologramm ist eine beugende Struktur des Hologramms im Volumen des holografischen Aufzeichnungsmaterials gespeichert. Als Aufzeichnungsmaterialien für Volumenhologramme werden in Wert- und/oder Sicherheitsdokumenten in der Regel holografische Filme eingesetzt. Dies sind Filme, die geeignet sind, Interferenzstrukturen zu speichern, deren charakteristische Abmessungen im Bereich der Lichtwellenlänge des Lichts liegen, welches zur Aufzeichnung bzw. Rekonstruktion des Hologramms verwendet wird.

Bei einem Kontaktkopierverfahren wird der holografische Film vor einem Master angeordnet, in dem beugende Strukturen ausgebildet sind, die in den holografischen Film "übertragen" werden sollen. Die beugenden Strukturen des Masters werden bei diesem Verfahren somit in den holografischen Film kopiert. Hierfür wird kohärentes Licht durch den holografischen Film, der in unmittelbarer Nähe vor dem Master oder in Kontakt mit dem Master vor diesem angeordnet ist, auf den Master gestrahlt. Die beugenden Strukturen in dem Master beugen das Licht so, dass das gebeugte Licht in den holografischen Film zurückgestrahlt wird. Dort interferiert dieses mit dem kohärenten Licht, welches zur Beleuchtung des Masters genutzt wird. In dem holografischen Film bildet sich somit eine Interferenzstruktur aus, welche durch das an dem Master gebeugte Licht festgelegt ist. Wird der holografische Film entwickelt und rekonstruiert, so gleicht die Rekonstruktion der, die beim Beleuchten des Masters zu beobachten ist. In dem holografischen Film wird ein Hologramm gespeichert, welches auch als Denisjuk-Hologramm bezeichnet wird und ein Volumenreflexionshologramm ist. Es versteht sich, dass das eingestrahlte Licht eine geeignete Wellenlänge(oder geeignete Wellenlängen) und eine geeignete Einstrahlrichtung (oder geeignete Einstrahlrichtungen) aufweisen muss, so dass eine Beugung an der Beugungsstruktur in der gewünschten Weise erfolgt.

Die beispielhafte Herstellung eines Masters wie auch das Kontaktkopierverfahren sind beispielsweise in der EP 0 896 260 A2 beschrieben. Der Master umfasst bei der dort beschriebenen Ausführungsform als Beugungsstruktur ein Volumenreflexionshologramm einer Mattscheibe. Wird während des Kontaktkopierverfahrens das zum Belichten verwendete kohärente Licht räumlich moduliert, so kann hierüber die in der räumlichen Modulation enthaltene Information, beispielsweise ein Gesichtsbild, in das einbelichtete Hologramm eingespeichert werden. Je nach räumlicher Modulation wird ein Bereich der Mattscheibe beim Belichten rekonstruiert und somit in das in dem holografischen Film ausgebildete Hologramm einbelichtet oder nicht.

Aus dem Stand der Technik sind unterschiedliche räumliche Lichtmodulatoren bekannt. Beispielsweise können hierfür sogenannte Digital Micromirror Devices (DMD), welche gesteuerte Mikrospiegel umfassen, verwendet werden. Ebenso ist es möglich, das kohärente Licht zu polarisieren und Flüssigkristallzellen zur gesteuerten Modulation des Lichts zu verwenden. Flüssigkristallzellen haben die Eigenschaft, durchtretendes Licht abhängig von einem Schaltzustand unterschiedlich zu verändern. Über einen nachgeschalteten Polarisationsfilter oder polarisationsabhängigen Spiegel oder Strahlteiler kann somit abhängig von dem Schaltzustand einer Flüssigkristallzelle die Lichtausbreitung beeinflusst werden. Wird eine Vielzahl von Flüssigkristallzellen, wie beispielsweise in einem LCD-Display verwendet, so kann ein aufgeweiteter Lichtstrahl zeitgleich in seiner räumlichen Ausdehnung unterschiedlich räumlich moduliert werden.

Als besonders geeignet neben DMD-Modulatoren haben sich sogenannte Liquid-Crystalon-Silicon-Modulatoren (LCoS-Modulatoren) erwiesen, bei denen die Flüssigkristallzellen vor einer Siliziumschicht angeordnet sind, welche das durch die Flüssigkristallzellen tretende Licht durch diese zurückreflektiert. Abhängig vom Schaltzustand wird erneut der Polarisationszustand des Lichts in den einzelnen Zellen unterschiedlich beeinflusst. Das zurückgestrahlte Licht ist somit räumlich hinsichtlich der Polarisation moduliert. Wird dieses über einen polarisationsabhängigen Stahlteiler oder einen Polarisationsfilter geführt, so wird der austretende Lichtstrahl auch hinsichtlich seiner Intensität moduliert. Der Lichtanteil, der einen vorgegebenen Polarisationszustand aufweist, kann den Strahlteiler oder den Polarisationsfilter passieren, der Anteil des Lichts, der einen zu dem vorgegebenen Polarisationszustand orthogonalen Polarisationszustand aufweist, wird hingegen absorbiert oder abgelenkt.

Als Sicherheitselemente von Sicherheits- oder Wertdokumenten sind Volumenhologrammen besonders geeignet, die sich bei lotrechter Betrachtung des belichteten und entwickelten holografischen Films verifizieren lassen. Eine Einstrahlung des Rekonstruktionslichts erfolgt hierbei vorzugsweise unter einem spitzen Winkel, beispielsweise 45° zum Lot. Der Winkel zwischen der Einstrahlrichtung des Rekonstruktionslichts und der Ausfallrichtung des an dem erzeugten Volumenhologramm gebeugten Lichts, welches die Information des Hologramms rekonstruiert, wird im Wesentlichen bei der Herstellung des Masters festgelegt. Um beispielsweise ein Gesichtsbild einer Person, in deren Ausweisdokument das hergestellte Hologramm integriert werden soll, in das Hologramm einzubelichten, ist es vorteilhaft, wenn der LCoS-Modulator parallel zu dem holografischen Film und dem Master orientiert angeordnet wird. Über einen zwischen dem LCoS-Modulator und dem Film angeordneten polarisationsabhängigen Strahlteiler wird polarisiertes Licht zunächst an dem Strahlteiler auf den LCoS-Modulator reflektiert. Dort wird das kohärente Licht hinsichtlich seiner Polarisation räumlich moduliert und zurückreflektiert. Die Anteile des Lichts, deren Polarisationszustand um 90° geändert ist, d.h., die in den orthogonalen Polarisationszustand überführt sind, können den polarisationsabhängigen Strahlteiler ungehindert zu dem Film und dem dahinter angeordneten Master passieren. Die Anteile des Lichts, deren Polarisationszustand nicht verändert ist, werden hingegen an dem Strahlteiler reflektiert und gelangen nicht auf den Film. Die Beugungsstruktur des Masters wird somit pixelweise kopiert.

Die DE 10 2006 061 220 A1 beschreibt ein holographisches Sicherheitselement mit einem Holographie Recordable Film, in welchem ein mehrfarbiges zweidimensionales Muster in Form eines Hologramms gebildet ist, wobei das Muster durch Pixel gebildet ist, wobei jedem Pixel ausschließlich eine von mehreren Farben zugeordnet ist, und wobei ein jedes Pixel entweder die Farbe oder keine Farbe aufweisen kann. Ferner sind ein Sicherheits- und/oder Wertdokument mit einem solchen Sicherheitselement, sowie Verfahren zu deren Herstellung beschrieben.

In der wissenschaftlichen Master-Arbeit in "Optik und Laserphysik" mit dem Titel "Holographic multi-stereogram constructed from computer images: Applied 3-D printer" von Kjell Einar Olsen, eingereicht bei dem Fachbereich Physik der Universität Bergen, in dem Jahr 1996, ist die Herstellung von Computerhologrammen beschrieben.

Allgemeine Hinweise auf die Holografie findet man beispielsweise in dem Buch "Optical Holography- Principles, techniques and applications" von P. Hariharan, Cambridge University Press, Cambridge, Nachdruck aus dem Jahr 1991.

Die DE 10 2007 042 386 A1 beschreibt ein Verfahren zum Herstellen farbiger individualisierter Hologramme sowie eine Vorrichtung zum Herstellen von individualisierten Hologrammen. Bei dem Verfahren ist vorgesehen, dass Licht mehrerer unterschiedlicher Farben erzeugt wird, das Licht farbgetrennt individuell räumlich moduliert wird, das modulierte Licht optisch so geführt wird, dass das Licht an einem holografischen Master zumindest teilweise gebeugt und/oder reflektiert wird und in dem einen holografischen Aufzeichnungsmaterial so mit dem modulierten nicht gebeugten und/oder reflektierten Licht überlagert wird und das mehrfarbige individualisierte Hologramm aufgenommen wird, wobei das Licht mittels mehrerer Spatial Light Modulatoren farbgetrennt zeitgleich moduliert wird und die mehreren einfarbigen modulierten Lichtstrahlen vor dem Beugen und/oder Reflektieren an dem holografischen Master zu einem mehrfarbigen farbgetrennt individuell modulierten Belichtungsstrahl kollinear zusammengeführt werden, so dass jedem der Pixel des individualisierten Hologramms genau eine der mehreren Farben zugeordnet ist.

Die DE 10 2007 042 385 A1 beschreibt ein Verfahren und eine Vorrichtung zum Herstellen eines individualisierten Hologramms. Ein Lichtstrahl wird in einem Spatial Light Modulator individuell moduliert und so geführt, dass zumindest ein Teil des individuell modulierten Lichtstrahls an dem holografischen Master gebeugt und/oder reflektiert wird und in dem holografischen Aufzeichnungsmaterial ein das individualisierte Hologramm repräsentierendes Interferenzmuster gebildet wird, wobei der individuell modulierte Lichtstrahl relativ zu dem holografischen Aufzeichnungsmaterial und dem holografischen Master bewegt wird, um den gesamten holografischen Master abzuscannen, und wobei das Aufzeichnungsmaterial anliegend an eine zylindrische Trommel oder ein zylindrisches Trommelsegment angeordnet wird und die Trommel beim Abtasten des holografischen Masters um eine Trommelachse der Trommel oder des Trommelsegments gedreht wird.

Aus der US 201010165426 A1 ist eine Einrichtung und ein Verfahren zum Reproduzieren von Hologrammen bekannt.

Aus der Masterarbeit von Daan P. Sprünken, A 2D Spatial Light Modulator for spatiotemporal shaping, Universität von Twente, Niederlande, 2008 sind Anwendungen eines optischen Lichtmodulators bekannt.

Bei der Herstellung sehr hoch aufgelöster, über einen räumlichen Lichtmodulator individualisierter oder personalisierter Hologramme hat es sich gezeigt, dass Pixelfehler in den im Kontaktkopierverfahren hergestellten Volumenhologrammen auftreten. Dies bedeutet, dass einzelne Pixel Fehlbelichtungen aufweisen. Insbesondere bei einer Ausbildung von "Graustufen"-Abbildungen treten solche Fehlbelichtungen auf. Bei Volumenhologrammen werden als Graustufen die unterschiedlichen Helligkeitswerte bezeichnet, die bei der Rekonstruktion des Volumenhologramms auftreten, wenn das Hologramm beleuchtet wird und in dem Hologramm eine bis auf die Helligkeitsvariationen flächig homogene Information, beispielsweise ein Abbild einer Streu- oder Mattscheibe, gespeichert ist. Die unterschiedlichen Helligkeitswerte gehen mit Variationen der Beugungseffizienz einher. Bei der Herstellung hoch aufgelöster individualisierter oder personalisierter Hologramme gemäß dem Stand der Technik entstehen somit Pixel, die entgegen der Erwartung zu stark belichtet sind und Pixel, die entgegen der Erwartung unterbelichtet sind. Diese verfälschen die individuelle Information, die in das Volumenhologramm gespeichert wird.

Der Erfindung liegt somit das technische Problem zugrunde, eine verbesserte Individualisierungseinrichtung und eine verbesserte Belichtungsvorrichtung für Hologramme zu schaffen, mit denen Hologramme belichtet werden können, ohne dass unbeabsichtigte Fehlbelichtungen auftreten.

Der Erfindung liegt die neue Erkenntnis zugrunde, dass die einzelnen Fehlbelichtungen vermutlich auf Interferenzeffekte zurückzuführen sind. Diese sind zwar nicht unmittelbar zu beobachten, äußern sich jedoch in den Fehlbelichtungen einzelner Pixel. Da das Ansprechverhalten des holografischen Films nicht linear ist sondern sprunghaft oberhalb einer Ansprechschwelle einsetzt, führen bereits geringe Intensitätsschwankungen im Bereich der Ansprechschwelle dazu, dass ein Pixel falsch belichtet ist. Bei holografischen Filmen ist der Energiedosisbereich, in dem beim Ausbilden des Hologramms ein Übergang von einer Beugungseffizienz von 0% zu einer Beugungseffizienz von 100% stattfindet, sehr schmal und liegt oberhalb einer Schwellenwertdosis. Belichtungen mit einer Energiedosis unterhalb der Schwellenwertdosis führen nicht zur Ausbildung einer rekonstruierbaren holografischen Struktur in dem holgrafischen Film. Leichte Schwankungen der Energiedosis bei der Hologrammbelichtung in dem relevanten Energiedosisbereich zur Herstellung eines Graustufenwertes führen daher zu starken Helligkeits- oder Graustufenvariationen. Interferenzen können zu solchen Intensitätsschwankungen des zur Belichtung genutzten Lichts führen, welche auf den ersten Blick nicht zu beobachten sind und sich nur in der Fehlbelichtung einzelner Pixel äußern. Erfindungsgemäß wird daher vorgeschlagen, die Oberflächennormale eines räumlichen Lichtmodulators und einer davor angeordneten optischen Komponente, die ein Strahlteilerwürfel ist, leicht gegeneinander zu verkippen. Bereits eine geringe Verkippung, die zu keiner wahrnehmbaren Verzerrung der in dem Hologramm über die räumliche Modulation gespeicherten Information führt, beseitigt Intensitätsschwankungen aufgrund von Interferenzen, die sich durch Mehrfachreflexionen von Licht an dem räumlichen Lichtmodulator und der davor angeordneten optischen Komponente im Strahlengang ergeben können.Die Verkippung liegt erfindungsgemäß im Bereich von 0,01° bis 0,1°.

Erfindungsgemäß wird somit eine Individualisierungsvorrichtung mit den Merkmalen das Patentanspruchs 1 geschaffen.

Erfindungsgemäß wird somit ferner eine holografische Belichtungsvorrichtung mit den Merkmalen des Patentanspruchs 7 geschaffen.

Bevorzugt ist der räumliche Lichtmodulator ein LCoS-Modulator oder ein DMD-Modulator. Beide Typen von Modulatoren sind technisch ausgereift und gut anzusteuern.

Ein als LCoS ausgebildeter räumlicher Lichtmodulator ist in der Regel mit einem zweidimensionalen Array an Flüssigkristallzellen ausgebildet. Ebenso ist es jedoch möglich, einen LCoS-Modulator nur als ein Zeilenarray auszubilden.

Häufig ist der räumliche Lichtmodulator mit einer transparenten Abdeckung, z. B. einer Scheibe oder einem Fenster, versehen. Daher ist bei einer Ausführungsform die Oberflächennormale des räumlichen Lichtmodulators durch eine Oberflächennormale einer physisch ausgebildeten Austrittsfläche des modulierten Lichts festgelegt

Insbesondere bei einem als LCoS-Modulator ausgebildeten räumlichen Lichtmodulator, kann die Oberflächennormale des räumlichen Lichtmodulators durch eine Oberflächennormale einer inneren Spiegelfläche festgelegt werden oder sein. Insbesondere, wenn eine äußere Schutzabdeckung fehlt.

In der Regel sind die Empfangsrichtung und die Ausgaberichtung der Individualisierungseinrichtung voneinander verschieden. Dieses ermöglicht eine größere Flexibilität hinsichtlich der Integrationsmöglichkeiten der Individualisierungseinrichtung und erweitert Strahlführungsmöglichkeiten in einer holografischen Belichtungseinrichtung.

Erfindungsgemäß ist der polarisationsabhängige Strahlteiler als Strahlteilerwürfel ausgebildet und sind die Oberflächennormalen der äußeren Oberflächen des Strahlteilerwürfels, die das modulierte Licht passiert, beide gegenüber der Oberflächennormale des räumlichen Lichtmodulators verkippt.

Bei einer erfindungsgemäßen holografischen Belichtungseinrichtung umfasst daher die Strahlführungsoptik als als optische Komponente den polarisationsabhängigen Strahlteiler, dessen Oberflächennormalen der Oberflächen, die das modulierte Licht im Strahlengang von dem räumlichen Lichtmodulator zu der Filmführungsvorrichtung passiert, gegenüber der Oberflächennormale des räumlichen Lichtmodulators verkippt sind. Durch diese Maßnahme kann verhindert werden, dass Licht zwischen dem räumlichen Lichtmodulator und Grenzflächen, durch die das Licht passiert, mehrfach hin und her reflektiert wird und hierbei eine Interferenz ausgebildet wird. Eine solche Interferenz führt zu Intensitätsschwankungen.

Erfindungsgemäß ist der polarisationsabhängige Strahlteiler als Strahlteilerwürfel ausgebildet und sind die Oberflächennormalen der äußeren Oberflächen des Strahlteilerwürfels, die das modulierte Licht im Strahlengang von dem räumlichen Lichtmodulator, z. B. dem LCoS, zu der Filmführungsvorrichtung passiert, parallel zur optischen Achse orientiert, bezüglich derer die Filmführungsvorrichtung und die Masteraufnahmevorrichtung ausgerichtet sind. Eine Oberflächennormale des räumlichen Lichtmodulators ist leicht gegen die optische Achse verkippt. Die optische Achse fällt mit der Sollbelichtungsrichtung des Hologramms zusammen.

Eine weitere Verringerung von Fehlbelichtungen kann dadurch herbeigeführt werden, dass zwischen dem Strahlteiler und der Filmführungsvorrichtung ein Polfilter angeordnet ist, dessen Oberflächennormalen gegenüber der Oberflächennormale des räumlichen Lichtmodulators verkippt sind.

Da polarisationsabhängige Strahlteiler auch bei einer sehr hohen Güte keine vollständig perfekte Strahlteilung erreichen können, kann der Polfilter diesen unerwünschten Anteil mit dem "falschen Polarisationszustand", der den Strahlteiler passiert hat, herausfiltern. Um jedoch Mehrfachreflexionen, die zu Interferenzen führen können zwischen den Oberflächen des Polfilters und dem räumlichen Lichtmodulator zu verhindern, sind die Oberflächennormalen des Polfilters erneut gegen die Oberflächennormale des LCoS verkippt.

Bei einer Ausführungsform einer Individualisierungseinrichtung ist im Strahlengang des modulierten Lichts hinter dem Strahlteiler ein Polfilter angeordnet, dessen Oberflächennormalen gegenüber der Oberflächennormale des räumlichen Lichtmodulators verkippt sind.

Bei einer besonders bevorzugten Ausführungsform sind eine oder beide Oberflächennormalen des Polfilters parallel zur optischen Achse orientiert, bezüglich derer die Filmführungsvorrichtung und die Masteraufnahmevorrichtung ausgerichtet sind. Die optische Achse gibt auch hier die Sollbelichtungsrichtung an.

Die Strahlführungsoptik kann weitere optische Elemente umfassen, um die Strahlführung und/oder auch eine ursprüngliche Ausgangspolarisation des verwendeten kohärenten Lichts herbeizuführen.

In der Regel handelt sich bei der Lichtquelle um einen Laser, deren Licht bereits aufgrund des Lichterzeugungsmechanismus eine nahezu vollständige Polarisation aufweist. Der Lichtstrahl wir in der Regel zumindest entlang einer Raumrichtung oder entlang zweier zueinander und zu der Ausbreitungsrichtung orthogonaler Raumrichtungen aufgeweitet. Dies kann beispielsweise mittels einer Powell-Linse, einer Zylinderlinse oder ähnlichen strahlformenden Elementen wie z.B. DOEs erfolgen, wobei die Abkürzung DOE für "Digital Optical Element" steht. Wird der Lichtstrahl nur entlang einer Raumrichtung aufgeweitet, so dass dieser in einer Ebene senkrecht zur Ausbreitungsrichtung eine Strecke ausleuchtet, welche angepasst an die Ausdehnung des Hologramms entlang einer Orientierungsrichtung ist, so wird dieser aufgeweitete Lichtstrahl in der Regel mit einer Ablenkeinheit, die rotatorisch oder translatorisch bewegbar ist, so geführt, dass diese ausgeleuchteten "Striche" ein flächig ausgebildetes Array an Modulationseinheiten, beispielsweise an Flüssigkristallzellen eines LCoS-Modülators, abtastend überstreicht. Der Master bzw. die darin gespeicherte Beugungsstruktur wird dann räumlich moduliert zeilenweise in den holografischen Film als Volumenhologramm kopiert. Bei anderen Ausführungsformen, bei denen der räumliche Lichtmodulator nur ein eindimensionales Array an Modulationseinheiten, beispielsweise Flüssigkristallzellen, aufweist, erfolgt die Strahlführung so, dass der räumlich modulierte Lichtstrahl Master und Film beispielsweise mäandernd abtastend überstreicht. Beispielsweise können der holografische Film und der Master relativ zu dem Lichtstrahl bewegt werden.

Nachfolgend wird die Erfindung unter Bezugnahme auf eine Zeichnung näher erläutert.

Hierbei zeigen:
- Fig. 1: eine schematische Darstellung einer Beleuchtungsvorrichtung zum Belichten eines Hologramms; und
- Fig. 2: eine schematische Draufsicht auf einen holografischen Film, in dem ein individualisiertes Hologramm gespeichert ist.

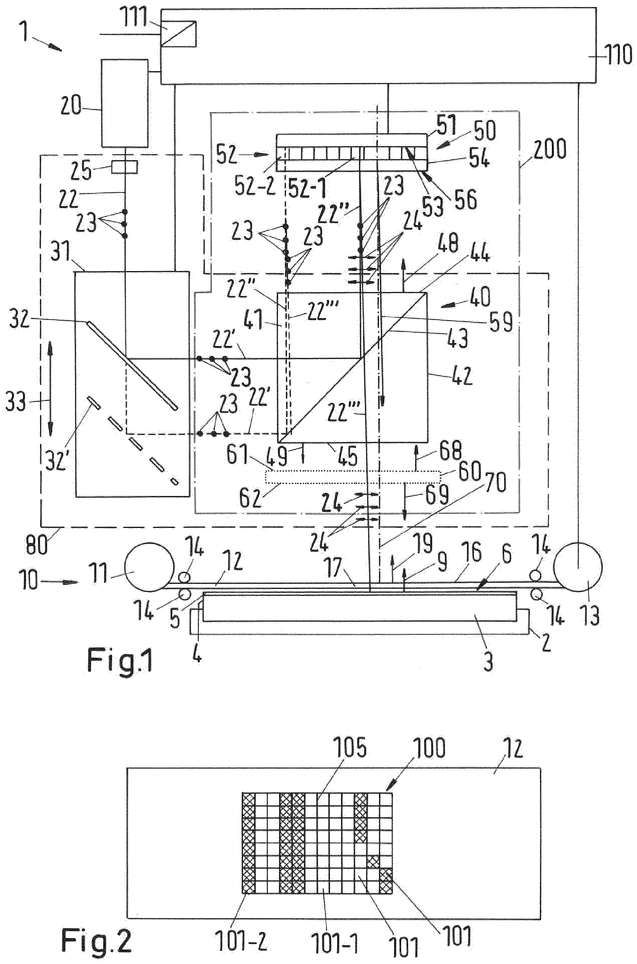

In Fig. 1 ist schematisch eine Vorrichtung 1 zum Belichten von Hologrammen gezeigt. Eine solche Beleuchtungsvorrichtung 1 wird auch als Holobelichter bezeichnet. Der Holobelichter 1 umfasst eine Masteraufnahmevorrichtung 2, in der ein Master 3 anordenbar ist. In der dargestellten Ausführungsform ist in der

Masteraufnahmevorrichtung 2 ein solcher Master 3 angeordnet. Der Master 3 umfasst einen Träger 4, welcher in der Regel aus Glas oder einem anderen Werkstoff ausgebildet ist. Auch andere Trägermaterialien sind möglich, beispielsweise Metalle. Auf den Träger 4 ist vorzugsweise mindestens eine optisch aktive Schicht, beispielsweise eine Beugungsschicht 5, aufgebracht, welche eine zu kopierende Beugungsstruktur umfasst. Vorzugsweise umfasst die Beugungsschicht 5 ein Volumenreflexionshologramm, welches kopiert werden soll. Besonders bevorzugt umfasst die als Beugungsschicht 5 ausgebildete optisch aktive Schicht ein Volumenreflexionshologramm einer Mattscheibe. Möglich ist es, dass mehrere optisch aktive Schichten, z.B. Beugungsschichten, übereinander und/oder nebeneinander angeordnet sind. Die optisch aktive Schicht oder die optisch aktiven Schichten können auch andere Beugungsstrukturen als Volumenhologramme oder nicht beugende Strukturen, wie Sägezahnspiegel, wie sie beispielsweise in DE 20 2007 006 796 U1 beschrieben sind, umfassen, sofern diese bei einer Belichtung über eine Oberseite Licht durch oder von dieser Oberseite 6 bzw. Oberfläche zurückstrahlen. Prinzipiell kann eine optisch aktive Struktur auch in dem Träger selbst ausgebildet sein und die optisch aktive Schicht 5 fehlen. Im Folgenden wird die Erfindung anhand von Ausführungsformen beschrieben, die als optisch aktive Schicht eine Beugungsschicht aufweisen. Dieses beschreibt jedoch nur eine Art der möglichen Ausführungsformen.

Der Holobelichter 1 umfasst ferner eine Filmführungsvorrichtung 10, die für ein Aufnehmen eines holografischen Films 12 und Halten und/oder Führen des Films 12 während der Belichtung des Hologramms vorgesehen ist. In der dargestellten Ausführungsform umfasst die Filmführungsvorrichtung 10 eine Filmrolle 11, auf der ein holografischer Film 12 bereitgestellt wird. Dieser wird nach dem Belichten auf einer weiteren Filmrolle 13 aufgewickelt. Der holografische Film 12 wird über Filmführungsrollen 14 so geführt, dass dieser parallel zu der Oberseite 6 des Masters vor diesem angeordnet ist. Der Film 12 erstreckt sich somit durch ein Volumen 17 der Filmführungsvorrichtung 10, welches für die Anordnung bzw. Aufnahme des holografischen Films 12 während des Kopiervorganges vorgesehen ist. Vorzugsweise liegt der holografische Film 12 während es Belichtungsvorgangs an dem Master 3 an. Hierdurch können Eigenbewegungen des holografischen Films 12 unterdrückt werden. Dieses steigert die erzielbare Beugungseffizienz des hergestellten Hologramms.

Um die Beugungsstruktur der mindestens einen Beugungsschicht 5 des Masters 3 zu kopieren, muss dieser mit kohärenten Licht 22 beleuchtet werden, um die Beugungsstruktur zu rekonstruieren. Auch bei einer optisch aktiven Struktur, die nicht beugend ist, muss das zur Belichtung genutzte Licht kohärent sein, um in den holografischen Film ein Hologramm belichten zu können. Hierfür ist eine Lichtquelle 20 vorgesehen, welche in der Regel als Laser ausgebildet ist. Hierbei handelt es sich vorzugsweise um einen cw-Laser. Es sind aber auch Ausführungsformen möglich, bei denen es sich um einen gepulsten Laser handelt. Das Licht 22 einer als Laser ausgebildeten Lichtquelle 20 weist einen ersten Polarisationszustand auf, der hier über Punkte 23 angedeutet ist. Zum Führen des Lichts 22 wird eine Strahlführungsoptik 80 verwendet. Das Licht der Lichtquelle 20 wird bei der dargestellten Darstellungsform zunächst auf eine Ablenk- und Scanvorrichtung 30 der Strahlführungsoptik 80 geführt. Diese umfasst einen mit einem Schrittmotor 31 gekoppelten Spiegel 32, an dem das einfallende Licht 22 umgelenkt wird. In einer ersten Stellung ist der Spiegel 32 mittels einer durchgezogenen Linie dargestellt. Das durch den Spiegel 32 in dieser Stellung abgelenkte Licht 22' ist ebenfalls mittels einer durchgezogenen Linie dargestellt.

Bei anderen Ausführungsformen wird das Licht der Lichtquelle mittels einer andersartig ausgeführten Optik abgelenkt. Beispielsweise können ein Spiegel oder mehrere Spiegel gedreht werden. Auch punktförmige und mäandernde Belichtungen oder vollflächige Belichtungen, mit denen eine flächige Information zeitgleich gespeichert wird, sind möglich.

Das abgelenkte Licht 22' wird auf einen polarisationsabhängigen Strahlteilerwürfel 40 der Strahlführungsoptik 80 geführt. Dieser ist aus einem ersten Prisma 41 und einem zweiten Prisma 42 gebildet, an deren Grenzfläche 43 eine polarisationsabhängige Strahlteilung erfolgt. Licht des ersten Polarisationszustands wird an dieser Grenzfläche 43 abgelenkt. Licht eines weiteren zu dem ersten Polarisationszustand orthogonalen Polarisationszustands kann hingegen durch die Grenzfläche 43 passieren. Licht des weiteren Polarisationszustands ist über drei Doppelpfeile 24 gekennzeichnet.

Das an der Grenzfläche 43 des polarisationsabhängigen Strahlteilerwürfels 40 abgelenkte Licht 22" wird auf einen räumlichen Lichtmodulator 50 gelenkt, der als sogenannter Liquid-Crystal-on-Silicon-Lichtmodulator ausgebildet ist. Der Lichtmodulator 50 umfasst eine Siliziumschicht 51, an.der auftreffendes Licht 22" reflektiert wird. Auf dieser Siliziumschicht 51 sind vorteilhafter Weise ebenso elektronische Schaltelemente ausgebildet, die zum Schalten von Flüssigkristallzellen 52 verwendet werden, die vor der zur Reflexion genutzten Oberfläche 53 der Siliziumschicht 51 angeordnet sind. Die einzelnen Flüssigkristallzellen 52 können individuell in unterschiedliche Schaltzustände versetzt werden. Abhängig von dem jeweiligen Schaltzustand wird ein Polarisationszustand des durchtretenden Lichts 22" geändert oder nicht geändert. Dieses bewirkt die räumliche Modulation des Lichts 22".

Vereinfachend wird hier angenommen, dass in einem ersten Schaltzustand das in einem ersten Polarisationszustand auf den Lichtmodulator 50 auftreffende Licht 22" beim Durchtritt durch eine Flüssigkristallzelle 52-1, welche aufgrund der Reflexion an der Oberflächenschicht 53 zweimal durchlaufen wird, insgesamt hinsichtlich der Polarisation so verändert wird, dass das Licht 22‴ anschließend in dem zu dem ersten Polarisationszustand orthogonalen weiteren Polarisationszustand polarisiert ist. Dieses hinsichtlich der Polarisation modulierte Licht 22‴ tritt durch eine Schutzabdeckung des räumlichen Lichtmodulators 50, die beispielsweise als transparente Schutzscheibe 54 ausgebildet ist. Eine Austrittsfläche 56 ist parallel zu der Oberflächenschicht 53 ausgebildet. Die Oberflächennormale des Lichtmodulators 50 ist somit orthogonal zu der Austrittsfläche 56 als auch zu der reflektierenden Oberflächenschicht 53. Das modulierte Licht 22‴ trifft nach dem Austreten aus dem Lichtmodulator 50 erneut auf den polarisationsabhängigen Strahlteiler 40.

Das von dem Lichtmodulator 50 zurückreflektierte modulierte Licht 22‴ kann abhängig von dem Polarisationszustand die Grenzfläche 43 passieren oder nicht. Ist das modulierte Licht 22‴, wie im exemplarische dargestellten Fall, aufgrund des ersten Schaltzustands der Flüssigkristallzelle 52-1 in den zu dem ersten Polarisationszustand orthogonalen weiteren Polarisationszustand überführt worden, so kann dieses die Grenzfläche 43 des polarisationsabhängigen Strahlteilerwürfels 40 passieren. Anteile des Lichts, die nach wie vor in dem ersten Polarisationszustand zu dem polarisationsabhängigen Strahlteilerwürfel 40 gelangen, werden an der Grenzfläche 43 abgelenkt und gelangen nicht zu dem holografischen Film 12 und dem Master 3. Durch den polarisationsabhängigen Strahlteilerwürfel 40 wird somit das Licht abhängig von dem aufmodulierten Polarisationszustand räumlich hinsichtlich der Intensität moduliert. Das modulierte Licht 22‴, welches den weiteren Polarisationszustand aufweist, der mittels der Doppelpfeile 24 gekennzeichnet ist, tritt durch den holografischen Film 12 hindurch und wird an der optisch aktiven Struktur der mindestens einen optisch aktiven Schicht des Masters 3 zurückgelenkt, z.B. bei einer als Beugungsschicht 5 ausgebildeten optisch aktiven Schicht gebeugt. Das zurückgestrahlte Licht (nicht dargestellt) interferiert dann in dem holografischen Film 12 mit dem von dem Lichtmodulator 50 kommenden modulierten Licht 22"'. Hierdurch wird die optisch aktive Struktur, z.B. die beugende Struktur, des Masters 3 in den holografischen Film 12 einbelichtet. Hierbei wird die optisch aktive Struktur pixelweise abhängig von der räumlichen Modulation entweder belichtet und kopiert oder andererseits nicht belichtet und somit auch nicht kopiert. Es entsteht somit eine Kopie der optisch aktiven Struktur, beispielsweise eine Kopie eines Reflexionsvolumenhologramms einer Mattscheibe, von welcher aufgrund der räumlichen Modulation des zur Belichtung genutzten Lichts 22‴ nur für jene Bildpunkte (Pixel) kopiert werden, die beim Belichten rekonstruiert werden.

Bei der Beschreibung der Ausführungsform wurden bis hierher davon ausgegangen, dass der räumliche Lichtmodulator den Polarisationszustand des Lichts um 90° dreht oder unverändert lässt. Es sind jedoch auch Änderungen möglich, die eine Drehung der Polarisationsrichtung zwischen 0° und 90° bewirken. Alle diese Drehungen führen dazu, dass das Licht einen Anteil in dem weiteren Polarisationszustand aufweist. Je nach Drehwinkel variiert der Anteil und nimmt mit dem Betrag der Drehung zwischen 0° und 90° zu. Hierdurch ist es möglich "Graustufen" zu belichten.

In der Regel wird das Licht 22 der Lichtquelle 20 entlang einer Raumrichtung aufgeweitet. Hierfür ist eine Strahlformungseinrichtung 25 der Strahlführungsoptik 80 vorgesehen, welche beispielsweise eine Powell-Linse oder eine Zylinderlinse umfasst. Bei der dargestellten Ausführungsform wird beispielsweise davon ausgegangen, dass der austretende Lichtstrahl des Lichts 22 in der Raumrichtung senkrecht zur Zeichnungsebene aufgeweitet ist. Entsprechend ist der räumliche Lichtmodulator 50 so ausgebildet, dass sich senkrecht zur Darstellungsebene weitere Reihen von Flüssigkristallzellen befinden. Diese können alle individuell angesteuert werden. Zu einem Zeitpunkt werden die Flüssigkristallzellen einer Spalte, welche senkrecht zur Zeichnungsebene orientiert ist, beleuchtet und zur Modulation des in der Raumrichtung senkrecht zur Zeichnungsebene aufgeweiteten Lichts 22" verwendet. Ebenso ist es möglich, den Lichtstrahl zusätzlich in der Raumrichtung, welche parallel zur Zeichnungsebene ist, aufzuweiten und somit auch alle Flüssigkristallzellen der vorhandenen Reihen des räumlichen Lichtmodulators 50 zeitgleich zu belichten und zur Modulation des Lichts 22 zu verwenden. Ist der Lichtstrahl in beide zueinander orthogonalen Raumrichtungen ausreichend aufgeweitet, so kann bei ausreichender Lichtintensität der Lichtquelle 20 eine vollflächige zweidimensionale Belichtung des Hologramms in den holografischen Film 12 zeitgleich erfolgen.

Häufig wird der Lichtstrahl jedoch nur entlang einer Richtung aufgeweitet, wie bei der dargestellten Ausführungsform. Entlang der zweiten Raumrichtung, welche in der dargestellten Ausführungsform in der Zeichnungsebene liegt, wird der Lichtstrahl abtastend über den räumlichen Lichtmodulator 50 und somit über den Master 3 und den holografischen Film 12 geführt.

Hierzu wird der Spiegel 32 mit dem Schrittmotor 31 parallel zur Ausbreitungsrichtung des aus der Lichtquelle 20 austretenden Lichts 22 bewegt, wie dieses über einen Doppelpfeil 33 angedeutet ist. Um das Abtasten des Masters 3 beim Kopieren zu verdeutlichen, ist der Spiegel 32' in einer zweiten Stellung gestrichelt dargestellt. Das in dieser zweiten Stellung des Spiegels 32' umgelenkte Licht 22' ist ebenfalls gestrichelt dargestellt.

Bei anderen Ausführungsformen kann die Ablenkung des Lichts anders bewirkt werden, beispielsweise über ein Verschwenken eines oder mehrerer Spiegel.

In der dargestellten Ausführungsform wird davon ausgegangen, dass die Flüssigkristallzelle 52-2 sich in einem Schaltzustand befindet, in dem das durch sie hindurchtretende, an der Siliziumoberfläche 53 reflektierte und erneut durch die Flüssigkristallzelle 52-2 hindurchtretende Licht 22" bei diesem Gesamtvorgang hinsichtlich des Polarisationszustands nicht verändert wird. Das von dem räumlichen Lichtmodulator 50 zurückreflektierte modulierte Licht 22‴ weist somit immer noch den ersten Polarisationszustand auf, welches über die Punkte 23 angedeutet ist. Dieses Licht kann den polarisationsabhängigen Strahlteilerwürfel 40 an der Grenzschicht 43 nicht passieren und gelangt somit nicht durch den holografischen Film 12 zu dem Master 3. Somit wird ein Teil der Beugungsstruktur nicht belichtet, somit nicht rekonstruiert und somit nicht in den holografischen Film 12 kopiert. Der gleiche Effekt tritt auch bei einer nicht beugenden optisch aktiven Struktur auf.

Der beschriebene Holobelichter 1 umfasst eine erfindungsgemäße Individualisierungseinrichtung 200, welche den räumlichen Lichtmodulator 50 und mindestens eine Komponente der Strahlführungsoptik 80 umfasst, die unmittelbar angrenzend an den Lichtmodulator 50 angeordnet ist. Bei der Ausführungsform nach Fig. 1 ist dieses der polarisationsabhängige Strahlteilerwürfel 40. Die Individualisierungseinrichtung 200 kann weitere Komponenten der Strahlführungsoptik 80 umfassen, insbesondere solche Komponenten im Strahlengang des modulierten Lichts 22‴.

Fig. 2 ist schematisch eine Draufsicht auf den holografischen Film 12 mit dem darin einbelichteten Volumenreflexionshologramm 100 dargestellt. Dargestellt ist bereits jenes Bild, welches ein Betrachter bei der Rekonstruktion des Volumenreflexionshologramms 100 sieht. Zur Veranschaulichung sind die einzelnen Pixel des räumlichen Modulationsmusters über ein Gitter 105 dargestellt. Dieses Gitter 105 ist in der Rekonstruktion eines Volumenreflexionshologramms selbstverständlich nicht zu sehen. Zu erkennen sind lediglich helle und dunkle Pixel 101. Es wäre jedoch auch möglich Graustufenpixel zu beleuchten, wie oben bereits erwähnt ist. Das Pixel 101-1, welches mit dem Licht 22‴ kopiert wurde, welches durch die Flüssigkristallzelle 52-1 moduliert ist, zeigt die diffuse Streuung der Mattscheibe, welche als Volumenreflexionshologramm in der Beugungsschicht 5 des Masters 3 gespeichert war. Dieses ist dadurch angedeutet, dass das entsprechende Pixel 101-1 weiß dargestellt ist. Hingegen ist das Pixel 101-2 des Hologramms 100, welches durch das Licht 22‴ kopiert worden ist, welches mittels der Flüssigkristallzelle 52-2 räumlich moduliert wurde, gekreuzt schraffiert dargestellt, da an dieser Stelle die Mattscheibenstruktur nicht kopiert ist und somit im Hologramm bei der Rekonstruktion kein Licht zum Betrachter zurückgeworfen wird. Zu erkennen ist, dass ein zweidimensionales Muster aus Pixeln 101 in das Hologramm 100 kopiert werden kann. Dieses ist durch die räumliche Modulation bedingt. Somit können individuelle oder persönliche Informationen als Pixelmuster in das Hologramm 100 kopiert werden.

Um Fehlbelichtungen einzelner Pixel 101 im Hologramm 100 zu verhindern, ist eine Oberflächennormale 59 des räumlichen Lichtmodulators 50, der als LCoS-Modulator ausgebildet ist, leicht gegenüber einer optischen Achse 70 verkippt, welche senkrecht auf der Oberfläche bzw. Oberseite 6 des Masters und senkrecht zur Ebene des holografischen Films 12 und senkrecht zu dessen Oberseite 16 bzw. Oberfläche steht. Eine Oberflächennormale 9 des Masters und eine Oberflächennormale 19 des holografischen Films 12 sind somit zueinander parallel und parallel zur optischen Achse 70 orientiert. Ebenso ist der Strahlteilerwürfel 40 so ausgerichtet, dass eine Oberflächennormale 48 eine Eintrittsfläche 44 des modulierten Lichts 22‴ und eine Oberflächennormale 49 der Austrittsfläche 45 des modulierten Lichts 22‴ jeweils parallel zur optischen Achse 70 orientiert sind. Somit sind auch diese Oberflächennormalen 48, 49 gegenüber der Oberflächennormale 59 des räumlichen Lichtmodulators verkippt. Diese leichte Verkippung, welche im Bereich von 0,01° bis 0,1° liegt, reicht aus, um zu verhindern, dass Mehrfachreflexion zwischen dem räumlichen Lichtmodulator 50 und den Oberseiten 6, 16 des Films 12 und des Masters 5 oder der Oberflächen 44, 45 des Strahlteilerwürfels 40 auftreten können. Hierdurch werden Interferenzeffekte, die Intensitätsschwankungen des modulierten Lichts 22‴ herbeiführen, vermieden. Die Individualisierungsvorrichtung 200 ist somit so ausgebildet, dass zwischen dem räumlichen Lichtmodulator 50 und eine Grenzfläche einer angrenzend angeordneten Komponente, d.h. hier einer der Oberflächen 44, 45 des Strahlteilerwürfels 40, keine Interferenzen aufgrund von Mehrfachreflexionen des modulierten Lichts 22‴ auftreten.

Bei einer optionalen Ausführungsform ist im Strahlengang zwischen dem Strahlteilerwürfel 40 und dem holografischen Film 12 ein weiterer Polarisationsfilter 60 angeordnet, der Licht des weiteren Polarisationszustands passieren lässt. Anteile des ersten Polarisationszustands, welche aus dem räumlich modulierten Licht 22'" von dem polarisationsanhängigen Strahlteilerwürfel 40 nicht vollständig aus dem Strahlengang entfernt wurden, werden an einem Passieren zu dem holografischen Film 12 und dem Master 5 gehindert. Dieses unterbindet ebenfalls Fehlbelichtungen. Eine Robustheit gegenüber Fehlbelichtungen wird verbessert.

Oberflächennormalen 68, 69 einer Eintrittsseite 61 und einer Austrittsseite 62 des Polarisationsfilters 60 sind ebenfalls gegenüber Oberflächennormale 59 des räumlichen Lichtmodulators 50 verkippt und vorzugsweise parallel zur optischen Achse 70 orientiert.

Besonders bevorzugt umfasst der Holobelichter 1 eine Steuereinrichtung 110, welche die Lichtquelle 20, die Ablenk- und Scanvorrichtung 30 sowie die Filmführungsvorrichtung 10 und den räumlichen Lichtmodulator 50 steuert. Die für die Steuerung des räumlichen Lichtmodulators 50 benötigten individuellen oder persönlichen Informationen können der Steuereinrichtung 110 über eine Schnittstelle 111 zugeführt werden.

Es versteht sich, dass hier lediglich eine beispielhafte Ausführungsform einer Belichtungsvorrichtung zum Kopieren von Hologrammen beschrieben ist. Die Strahlführungsoptik 80 kann zusätzliche und/oder andere optische Elemente umfassen, welche das Licht 22 der Lichtquelle 20 auf den Lichtmodulator 50 und von diesem gradlinig zu dem holografischen Film 12 und dem Master 3 führen.

Angemerkt wird, dass die Fig. 1 nur eine schematische Darstellung eines Holobelichters 1 und einer Individualisierungseinrichtung 200 zeigt. Insbesondere die Abstände zwischen den einzelnen Komponenten sind nicht maßstabsgerecht. Ein Abstand zwischen dem räumlichen Lichtmodulator 50 und dem Strahlteilerwürfel 40 ist in der Regel sehr viele geringer als ein Abstand von dem Strahlteilerwürfel 40 zu der Masteraufnahmevorrichtung 2 bzw. dem holografischen Film 12.

Insbesondere kann die Erfindung auch auf Belichtungseinrichtungen für Hologramme angewendet werden, bei denen der Master auf einer Außenfläche einer Trommel angeordnet ist. Allgemeine Strahlführungen für solche Belichtungseinrichtungen sind beispielsweise in der DE 10 2007 042 385 und DE 10 2007 042 386 beschrieben.

Wesentlich für die Erfindung ist es, dass in unmittelbarer Nähe des räumlichen Lichtmodulators keine Grenzflächen parallel zu einer Grenzfläche und/oder Reflexionsfläche des räumlichen Lichtmodulators ausgebildet ist, durch die das zur Belichtung genutzte Licht senkrecht hindurchtritt oder an der das zur Belichtung genutzte Licht senkrecht, d. h. parallel zur Oberflächennormale reflektiert wird.

### Bezugszeichenliste

- 1: J Holobelichter/Belichtungsvorrichtung für Hologramme
- 2: Masteraufnahmevorrichtung
- 3: Master
- 4: Träger
- 5: Beugungsschicht (umfasst beispielsweise Volumenhologramm einer Mattscheibe)
- 6: Oberseite
- 9: Oberflächennormale
- 10: Filmführungsvorrichtung
- 11: Filmrolle
- 12: holografischer Film
- 13: weitere Filmrolle
- 14: Führungsrollen
- 16: Oberseite (des Films 12)
- 17: Volumen
- 19: Oberflächennormale
- 20: Lichtquelle (Laser)
- 22, 22', 22": Licht
- 22‴: moduliertes Licht
- 23: Punkte (kennzeichnen einen ersten Polarisationszustand)
- 24: Doppelpfeile (kennzeichnen einen weitere zu dem ersten Polarisationszustand orthogonalen Polarisationszustand)
- 25: Strahlformungseinrichtung
- 30: Ablenk- und Scanvorrichtung
- 31: Schrittmotor
- 32: Spiegel (erste Stellung)
- 32': Spiegel (zweite Stellung)
- 33: Doppelpfeil
- 40: polarisationsabhängiger Strahlteilerwürfel
- 41: erstes Prisma
- 42: zweites Prisma
- 43: Grenzfläche
- 44: Eintrittsfläche
- 45: Austrittsfläche
- 48, 49: Oberflächennormalen
- 50: räumlicher Lichtmodulator als LCoS ausgeführt
- 51: Siliziumschicht
- 52: Flüssigkristallzellen
- 52-1: eine Flüssigkristallzelle (erster Schaltzustand
- 52-2: andere Flüssigkristallzelle (zweiter Schaltzustand)
- 53: Oberfläche der Siliziumschicht
- 54: Schutzscheibe
- 56: Austrittsfläche
- 59: Oberflächennormale
- 60: Polarisationsfilter
- 61: Eintrittsseite
- 62: Austrittseite
- 68, 69: Oberflächennormalen
- 70: optische Achse
- 80: Strahlführungsoptik
- 100: Hologramm
- 101: Pixel
- 101-1: erstes Pixel
- 101-2: zweites Pixel
- 105: Gitter
- 110: Steuereinrichtung
- 111: Schnittstelle
- 200: Individualisierungseinrichtung

## Patentansprüche

1. Individualisierungseinrichtung (200) für eine individualisierende Belichtung bei der Herstellung von Volumenhologrammen im Kontaktkopierverfahren von einem Master, die ausgebildet ist, Licht (22) einer Lichtquelle (20) aus einer Empfangsrichtung zu empfangen und räumlich moduliertes Licht (22‴) unter einer Ausgaberichtung für die individualisierende Holgrammbelichtung auszugeben, umfassend
einen räumlichen Lichtmodulator (50), und
eine Strahlführungsoptik (80), um das Licht (22) der Lichtquelle (20) auf den räumlichen Lichtmodulator (50) zu führen und das von dem räumlichen Lichtmodulator (50) modulierte Licht (22‴) wegzuführen,
**dadurch gekennzeichnet, dass**
eine Oberflächennormale (59) des räumlichen Lichtmodulators (50) zumindest gegenüber einer Oberflächennormale einer ersten Grenzfläche (44) einer ersten Komponente (40) der Strahlführungsoptik (80) verkippt ist, die das modulierte Licht (22‴) nach der Modulation an dem räumlichen Lichtmodulator (50) passiert, so dass Intensitätsschwankungen bei der Hologrammbelichtung auf Grund von Interferenzen, die sich durch Mehrfachreflexionen von Licht an dem Lichtmodulator (50) und der ersten Komponente (40) ergeben, beseitigt sind, wobei die Verkippung im Bereich von 0,01° bis 0,1° liegt, wobei die Strahlführungsoptik (80) als erste Komponente einen polarisationsabhängigen Strahlteiler (40) umfasst, dessen Oberflächennormalen (48, 49) der äußeren Oberflächen (44, 45), die das modulierte_Licht (22'") passiert, gegenüber der Oberflächennormale (59) des räumlichen Lichtmodulators (50) verkippt sind,
wobei der polarisationsabhängige Strahlteiler als Strahlteilerwürfel (40) ausgebildet ist und die Oberflächennormalen (48, 49) der äußeren Oberflächen (44, 45) des Strahlteilerwürfels, die das modulierte Licht (22‴) passiert, beide gegenüber der Oberflächennormale (59) des räumlichen Lichtmodulators (50) verkippt sind.

2. Individualisierungseinrichtung (200) nach Anspruch 1, **dadurch gekennzeichnet, dass** der räumliche Lichtmodulator (50) ein LCoS-Modulator oder ein DMD-Modulator ist.

3. Individualisierungseinrichtung (200) nach Anspruch 1 oder 2, **dadurch gekennzeichnet, dass** die Oberflächennormale (59) des räumlichen Lichtmodulators (50) durch eine Oberflächennormale einer physisch ausgebildeten Austrittsfläche (56) des modulierten Lichts (22‴) festgelegt ist.

4. Individualisierungseinrichtung (200) nach Anspruch 1 oder 2, **dadurch gekennzeichnet, dass** die Oberflächennormale (59) des räumlichen Lichtmodulators (50) durch eine Oberflächennormale einer inneren reflektierenden Oberflächenschicht (53) festgelegt ist.

5. Individualisierungseinrichtung (200) nach Anspruch 4, **dadurch gekennzeichnet, dass** die Empfangsrichtung und die Ausgaberichtung voneinander verschieden sind.

6. Individualisierungseinrichtung nach einem der vorangehenden Ansprüche, **dadurch gekennzeichnet, dass** im Strahlengang des modulierten Lichts (22‴) hinter dem , Strahlteiler (40) ein Polfilter (60) angeordnet ist, dessen Oberflächennormalen (68, 69) gegenüber der Oberflächennormale (59) des räumlichen Lichtmodulators (50) verkippt sind.

7. Holobelichter (1) umfassend
eine Masteraufnahmevorrichtung (2) zum Aufnehmen eines Masters (3),
eine Filmführungsvorrichtung (10) zum Führen und/oder Halten eines ebenen holografischen Films (12),
eine Lichtquelle (20),
eine Individualisierungseinrichtung (200), nach einem der vorangehenden Ansprüche,
die Licht (22) der Lichtquelle (20) empfängt und räumlich moduliertes Licht (22‴) unter einer Ausgaberichtung ausgibt,
wobei die Filmführungsvorrichtung (10) in dem Strahlengang des modulierten Lichts (22‴) vor der Masteraufnahmevorrichtung (2) angeordnet ist und Filmführungsvorrichtung (10) und Masteraufnahmevorrichtung (2) so zueinander ausgerichtet sind, dass eine Oberfläche eines in der Masteraufnahmevorrichtung (2) angeordneten Masters (3) und ein in der Filmführungsvorrichtung angeordneten holografischen Films (12) zumindest lokal in Kontakt bringbar sind oder in Kontakt sind, und ein für die Aufnahme des holografischen Films (12) vorgesehenes Volumen (17) der Filmführungsvorrichtung (10) so von dem räumlich modulierten Licht (22‴) durchstrahlt wird, dass dieses mit dem von dem Master (3) zurückgestrahlten Licht in diesem Volumen (17) interferiert,
wobei die Oberflächennormalen (48, 49) der äußeren Oberflächen (44, 45) des Strahlteilerwürfels, die das modulierte Licht (22‴) passiert, beide parallel zu einer Oberflächennormale (9) der von dem modulierten Licht (22‴) beleuchteten Oberfläche eines in der Masteraufnahmevorrichtung (2) angeordneten Masters (3) orientiert sind.

8. Holobelichter (1) nach Anspruch 7, **dadurch gekennzeichnet, dass** im Strahlengang des modulierten Lichts (22‴) hinter dem Strahlteiler (40) ein Polfilter (60) angeordnet ist, dessen Oberflächennormalen (68, 69) gegenüber der Oberflächennormale (59) des räumlichen Lichtmodulators (50) verkippt sind und eine Oberflächennormale (68, 69) oder beide Oberflächennormalen (68, 69) des Polfilters (60) parallel zu einer Oberflächennormale (9) der von dem modulierten Licht (22‴) beleuchteten Oberfläche eines in der Masteraufnahmevorrichtung (2) angeordneten Masters (3) orientiert sind.

## Claims

1. An individualisation device (200) for individualising exposure during creation of volume holograms using the contact copy method from a master designed to receive light (22) of a light source (20) from a receive direction and to output spatially modulated light (22‴) in an output direction for the individualising hologram exposure, comprising
a spatial light modulator (50), and
beam guiding optics (80) to guide the light (22) of the light source (20) to the spatial light modulator (500) and to guide the light (22‴) modulated by the spatial light modulator (50) away,
**characterised in that**
a surface normal (59) of the spatial light modulator (50) is tilted at least with respect to a surface normal of a first boundary surface (44) of a first component (40) of the beam guiding optics (80), which the modulated light (22‴) passes after modulation at the spatial light modulator (50), so that intensity fluctuations during hologram exposure due to inferences resulting from multiple reflections of light at the light modulator (50) and the first component (40) are eliminated, wherein the tilting is in a range of 0.01° to 0.1°, wherein the beam guiding optics (80) comprises a polarisation dependant beam splitter (40) as the first component, the surface normals (48, 49) of which of the outer surfaces (44, 45), which the modulated light (22‴) passes, are tilted with respect to the surface normal (59) of the spatial light modulator (50),
wherein the polarisation dependant beam splitter is designed as a beam splitter cube (40) and the surface normals (48, 49) of the outer surfaces (44, 45) of the beam splitter cube, which the modulated light (22‴) passes, are both tilted with respect to the surface normal (59) of the spatial light modulator (50).

2. The individualisation device (200) according to claim 1, **characterised in that** the spatial light modulator (50) is a LCoS modulator or a DMD modulator.

3. The individualisation device (200) according to claim 1 or 2, **characterised in that** the surface normal (59) of the spatial light modulator (50) is defined by a surface normal of a physically designed exit surface (56) of the modulated light (22‴).

4. The individualisation device (200) according to claim 1 or 2, **characterised in that** the surface normal (59) of the spatial light modulator (50) is defined by a surface normal of an inner reflecting surface layer (53).

5. The individualisation device (200) according to claim 4, **characterised in that** the receive direction and the output direction are different from each other.

6. The individualisation device according to any of the preceding claims, **characterised in that** a polarising filter (60) is arranged in the beam path of the modulated light (22‴) behind the beam splitter (40), the surface normals (68, 69) of which are tilted with respect to the surface normal (59) of the spatial light modulator (50).

7. A holo exposer (1) comprising:
a master receiving apparatus (2) for receiving a master (3),
a film guiding apparatus (10) for guiding and/or holding a flat holographic film (12),
a light source (20),
an individualisation device (200) according to any of the preceding claims,
which receives light (22) of the light source (20) and outputs spatially modulated light (22‴) in an output direction,
wherein the film guiding apparatus (10) is arranged in the beam path of the modulated light (22‴) before the master receiving apparatus (2), and the film guiding apparatus (10) and the master receiving apparatus (2) are aligned with each other such that a surface of a master (3) arranged in the master receiving apparatus (2) and of a holographic film (12) arranged in the film guiding apparatus are at least locally contactable or in contact, and a volume (17) of the film guiding apparatus (10) provided for receiving the holographic film (12) is penetrated by the spatially modulated light (22‴) such that it interferes with the light reflected by the master (3) in this volume (17),
wherein the surface normals (48, 49) of the outer surfaces (44, 45) of the beam splitter cube, which the modulated light (22‴) passes, are both orientated in parallel to a surface normal (9) of the surface of a master (3) arranged in the master receiving apparatus (2) illuminated by the modulated light (22‴).

8. The holo exposer (1) according to claim 7, **characterised in that** a polarising filter (60) is arranged in the beam path of the modulated light (22‴) behind the beam splitter (40), the surface normals (68, 69) of which are tilted with respect to the surface normal (59) of the spatial light modulator (50), and one surface normal (68, 69) or both surface normals (68, 69) of the polarising filter (60) are orientated in parallel to a surface normal (9) of the surface of a master (3) arranged in the master receiving apparatus (2) illuminated by the modulated light (22‴).

## Revendications

1. Dispositif d'individualisation (200) pour un éclairage individualisé lors de la fabrication d'hologrammes volumiques selon un procédé de tirage contact d'un original, qui est conçu pour recevoir la lumière (22) d'une source de lumière (20) provenant d'un dispositif de réception et pour délivrer la lumière (22‴) spatialement modulée selon une direction de sortie pour l'éclairage individualisé d'hologramme, comprenant un modulateur spatial de lumière (50), et
une optique de guidage de faisceau (80), pour guider la lumière (22) de la source de lumière (20) sur le modulateur spatial de lumière (50) et pour éloigner la lumière (22‴) modulée par le modulateur spatial de lumière (50),
**caractérisé en ce qu'**
une normale de surface (59) du modulateur spatial de lumière (50) est inclinée au moins par rapport à une normale de surface d'une première surface limite (44) d'un premier composant (40) de l'optique de guidage de faisceau (80) que la lumière modulée (22‴) traverse après la modulation sur le modulateur spatial de lumière (50) de sorte que des variations d'intensité lors de l'éclairage d'hologramme en raison d'interférences dues à des réflexions multiples de lumière sur le modulateur spatial de lumière (50) et sur le premier composant (40) soient éliminées, dans lequel l'inclinaison se situe dans la plage allant de 0,01° à 0,1°, dans lequel l'optique de guidage de faisceau (80) comprend comme premier composant un séparateur de faisceau (40) dépendant de la polarisation, dont les normales de surface (48, 49) des surfaces extérieures (44, 45) que traverse la lumière (22‴) modulée sont inclinées par rapport à la normale de surface (59) du modulateur spatial de lumière (50),
dans lequel le séparateur de faisceau dépendant de la polarisation est conçu sous la forme de cube séparateur de faisceau (40) et les normales de surface (48, 49) des surfaces extérieures (44, 45) du cube séparateur de faisceau, que la lumière (22‴) modulée traverse sont toutes les deux inclinées par rapport à la normale de surface (59) du modulateur spatial de lumière (50).

2. Dispositif d'individualisation (200) selon la revendication 1, **caractérisé en ce que** le modulateur spatial de lumière (50) est un modulateur LCoS ou un modulateur DMD.

3. Dispositif d'individualisation (200) selon la revendication 1 ou 2, **caractérisé en ce que** la normale de surface (59) du modulateur spatial de lumière (50) est définie par une normale de surface d'une surface de sortie (56) constituée physiquement de la lumière (22‴) modulée.

4. Dispositif d'individualisation (200) selon la revendication 1 ou 2, **caractérisé en ce que** la normale de surface (59) du modulateur spatial de lumière (50) est définie par une normale de surface d'une couche de surface interne réfléchissante (53).

5. Dispositif d'individualisation (200) selon la revendication 4, **caractérisé en ce que** le dispositif de réception et le dispositif de sortie sont différents l'un de l'autre.

6. Dispositif d'individualisation (200) selon l'une quelconque des revendications précédentes, **caractérisé en ce que** dans le trajet de faisceau de la lumière (22‴) modulée derrière le séparateur de faisceau (40) est disposé un filtre polarisant (60), dont les normales de surface (68, 69) sont inclinées par rapport à la normale de surface (59) du modulateur spatial de lumière (50).

7. Dispositif d'éclairage pour hologramme (1) comprenant
un dispositif de réception d'original (2) pour recevoir un original (3),
un dispositif de guidage de film (10) pour guider et/ou retenir un film holographique plat (12),
une source de lumière (20),
un dispositif d'individualisation (200) selon l'une quelconque des revendications précédentes,
reçoit la lumière (22) de la source de lumière (20) et délivre la lumière (22‴) spatialement modulée selon une direction de sortie,
dans lequel le dispositif de guidage de film (10) est disposé sur le trajet de faisceau de la lumière (22‴) modulée avant le dispositif de réception d'original (2) et le dispositif de guidage de film (10) et le dispositif de réception d'original (2) sont alignés l'un par rapport à l'autre de sorte qu'une surface d'un original (3) disposé dans le dispositif de réception d'original (2) et un film holographique (12) disposé dans le dispositif de guidage de film puissent être mis en contact ou soient en contact l'un avec l'autre au moins localement, et qu'un volume (17) du dispositif de guidage de film (10) prévu pour recevoir le film holographique (12) soit traversé par la lumière (22‴) spatialement modulée de sorte que celle-ci interfère avec la lumière renvoyée par l'original (3) dans ce volume (17),
dans lequel les normales de surface (48, 49) des surfaces externes (44, 45) du cube séparateur de faisceau que la lumière (22‴) modulée traverse, sont toutes deux orientées parallèlement à une normale de surface (9) de la surface éclairée par la lumière (22‴) modulée d'un original disposé (3) dans le dispositif de réception d'original (2).

8. Dispositif d'éclairage pour hologramme (1) selon la revendication 7, **caractérisé en ce que** dans le trajet du faisceau de la lumière (22‴) modulée, derrière le séparateur de faisceau (40), est disposé un filtre polarisant (60) dont les normales de surface (68, 69) sont inclinées par rapport à la normale de surface (59) du modulateur spatial de lumière (50) et une normale de surface (68, 69) ou les deux normales de surface (68, 69) du filtre polarisant (60) sont orientées parallèlement à une normale de surface (9) de la surface éclairée par la lumière (22‴) modulée d'un original (3) disposé dans le dispositif de réception d'original (2).
